# EUROPEAN PATENT APPLICATION

(11) **EP 2 023 547 A1**
(43) Date of publication of application: **11.02.2009**
(21) Application number: 07015717.7
(22) Date of filing: 09.08.2007
(51) Int. Cl.: H04L 12/56

(54) **Common protocol architecture for enhanced RACH and EDCH**

(71) Applicant: Nokia Siemens Networks Oy, 02610 Espoo (FI)
(72) Inventor: Pirskanen, Juho, 33580 Tampere (FI); Unteregger, Burghard, 1040 Wien (AT); Wimmer, Markus, 50-335 Wroclaw (PL)
(74) Representative: Bruglachner, Thomas E.

(57) **Abstract**

A method for uplink transfer in a wireless communication system over a wireless interface between a radio network and a user equipment node (UE), at the user equipment node (UE) side comprises the steps of providing a protocol data unit (PDU) to a medium access control (MAC) layer of the UE, segmenting the PDU by the MAC layer of the UE, and storing information regarding the segmentation of the PDU in a header of the PDU.

## Description

This invention relates to an improved mobile radio telecommunication network.

A Universal Mobile Telecommunications System (UMTS) is a third generation mobile communication system, which evolved from a Global System for Mobile Communications (GSM), and is intended to provide improved mobile communication services based on a GSM core network (CN) and Wideband Code Division Multiple Access (WCDMA) access technology.

US 20070081513 discloses a wireless data flow between a radio network node and a user equipment node. A medium access control (MAC) layer located in the radio network node determines a priority of data unit relative to other data units associated with the one data flow.

US 20070165526 discloses a method to enable a medium access control (MAC) to reduce and to increase packet size and the data transmit rate by working with an upper layer controller to maximize data transfer rate, transmitter power, and to minimize packet drop rate.

It is an object to provide an improved mobile radio telecommunication network. This object is achieved by the subject matter of the independent claim. Further improvements are achieved by the subject matter of the dependent claims.

A method for uplink transfer in a wireless communications system over a wireless interface between a radio network and a user equipment node (UE), wherein a MAC layer of the UE side comprises a MAC-d sub-layer, a MAC-c sub-layer, and a MAC-es sub-layer with the MAC-c sub-layer being provided between the MAC-d sub-layer and the MAC-es sub-layer.

The method may comprise the steps of providing a protocol data unit (PDU) to a medium access control (MAC) layer of the UE, segmenting the PDU by the MAC layer of the UE, and storing information regarding the segmentation of the PDU in a header of the PDU.

A physical layer of the UE may request the segmentation of the PDU. The information regarding the segmentation can be stored in a length field of the header of the PDU and a segmentation indicator (SI) field of the header of the PDU.

The MAC-c may evaluate an UE id of the PDU with respect to assigning the data. The MAC-c may send the PDU for segmentation.

The SI field and the length field advantageously supports the segmentation of the PDU, which allows the PDU to be response to requirements of the physical layer 33, which is unlike other protocol specification.

A transmission sequence number (TSN) of the PDU can be stored in the header of the PDU or be stored in a TSN field of the header of the PDU. The TSN field supports soft hand over (SHO), which is a configured for accomplishment between a Node B and another Node B. This is different from the usual protocol.

A logical channel id of the PDU may be stored in the header of the PDU or in a logical channel id field of the header of the PDU. A presence status of a UE id can be stored in the header of the PDU or in a F field of the header of the PDU.

A UE id may be stored in the header of the PDU in a UE id field of the header of the PDU. The presence status of the UE id can indicate an absence of the UE id field in the header of the PDU, and the UE id field is not provided of the header of the PDU, if the radio network has indicated a correct receipt of the UE id to the UE. The radio network may allocate a value of the UE id, if the UE is in a Radio Resource Control (RRC) connected state and is not performing a cell or UTRAN Registration Area (URA) update procedure due to cell reselection. The UE may select a random value for the UE id if the UE is performing a cell or UTRAN Registration Area (URA) update procedure due to cell reselection or if the UE is performing a Radio Resource Control (RRC) Connection request procedure.

The UE id field together with the F field support contention resolution or operation without higher layer configuration. This differs from other protocol, which does not resolve contention in this manner. The UE id field also offers fast contention resolution as the content of UE id field is provided in various situations. This benefits subscribers of the communication network and is not available in most other protocols.

A method for uplink transfer in a wireless communications system over a wireless interface between a radio network and a user equipment node (UE), wherein a MAC layer of the radio network side comprises a MAC-d sub-layer, a MAC-c sub-layer, and a MAC-es sub-layer with the MAC-c sub-layer being provided between the MAC-d sub-layer and the MAC-es sub-layer.

The method may comprise the step of evaluating the UE id with respect to assigning a PDU by the MAC-c sub-layer. The PDU can be send for segmentation and for storing information regarding the segmentation of the PDU in a header of the PDU.

The method can also comprise the steps of receiving a PDU by a medium access control (MAC) layer of the radio network side, and reassembling the PDU by the MAC layer of the radio network side based on segmentation information, which is stored in a header of the PDU.

The segmentation information may be stored in a length field of the header of the PDU and is stored in a segmentation indicator (SI) field of the header of the PDU. The PDU can be reordered based on a transmission sequence number (TSN), which is stored in the header of the PDU. The transmission sequence number (TSN) may be stored in a transmission sequence-number TSN field of the PDU. A reordering queue can be determined based on a logical channel id, which is stored in the header of the PDU. A logical channel may be determined based on the logical channel id, which is stored in the header of the PDU. A Radio Link Control (RLC) entity can be determined based on the logical channel id, which is stored in the header of the PDU. The logical channel id can be stored in a logical channel id field of the header of the PDU. A contention can be resolved based on an UE id, which is stored in the header of the PDU. The UE id may be stored in an UE id field of the header of the PDU.

A wireless communications system in an uplink transfer over a wireless interface between a radio network and the user equipment node (UE), the wireless communications system comprising a medium access control (MAC) layer at the UE side. The MAC layer of the UE side comprises a MAC-d sub-layer, a MAC-c sub-layer, and a MAC-es sub-layer with the MAC-c sub-layer being provided between the MAC-d sub-layer and the MAC-es sub-layer.

The a medium access control (MAC) layer at the UE side may comprise a MAC-es sub-layer or a MAC-e sub-layer with a segmentation entity for segmenting a protocol data unit (PDU) and for storing information regarding the segmentation in a header of the PDU.

The MAC-es sub-layer or the MAC-e sub-layer may comprise a numbering entity for storing a transmission sequence number (TSN) in the header of the PDU. The MAC-es sub-layer or the MAC-e sub-layer may comprise a multiplexing entity for storing a logical id of the PDU in the header of the PDU and for storing a UE id status flag of the PDU in the header of the PDU. The MAC-e sub-layer can comprise a UE id setting entity for storing a UE id of the PDU in the header of the PDU.

A wireless communications system in an uplink over a wireless interface between the radio network and a user equipment node (UE), the wireless communications system comprising a medium access control (MAC) layer at the radio network side. The MAC layer at the radio network side comprises a MAC-d sub-layer, a MAC-c sub-layer, and a MAC-es sub-layer with the MAC-c sub-layer being provided between the MAC-d sub-layer and the MAC-es sub-layer.

The wireless communications system may comprise a medium access control (MAC) layer at the radio network side comprises a MAC-es sub-layer with a reassembly entity for reassembling a segmented protocol data unit (PDU) based on a segmentation information, which is stored in a header of the PDU.

The MAC-es sub-layer can comprise a reordering entity for reordering a PDU based on a transmission sequence number (TSN), which is stored in the header of the PDU. The MAC-es sub-layer or the MAC-e sub-layer may comprise a reordering queue distribution entity for determining reordering queue for a PDU based on a logical channel id, which is stored in the header of the PDU. The MAC-e sub-layer can resolve contention for a PDU using a UE id, which is stored in the header of PDU.
- FIG. 1: illustrates in block format a UMTS (Universal Mobile Telecommunications System) type system,
- FIG. 2: illustrates a protocol layer structure 30 of the UMTS system 10 of FIG. 1,
- FIG. 3: illustrates AM (acknowledge mode) RLC (radio link control) PDU (protocol data unit) 40, which is transmitted by the RLC layer 31 of FIG. 2,
- FIG. 4: illustrates a first MAC-e header 50 of a PDU, or a MAC-es header 50 of a PDU, for the uplink transport channels of FIG. 2,
- FIG. 5: illustrates a second MAC-e header 60 of a PDU, or a MAC-es header 60 of a PDU, for the uplink transport channels of FIG. 2,
- FIG. 6: illustrates a simplified protocol architecture 65 for E-DCH (enhanced dedicated channel) in the side of a UE,
- FIG. 7: illustrates a simplified protocol architecture for E-DCH in the side of a UTRAN,
- FIG. 8: illustrates a simplified protocol architecture 65 for E-RACH (enhanced random access channel) in the side of a UE, and
- FIG. 9: illustrates a simplified protocol architecture 200 for E-RACH in the side of a UTRAN.

In the following description, details are provided to describe the embodiments of the application. It shall be apparent to one skilled in the art, however, that the embodiments may be practised without such details.

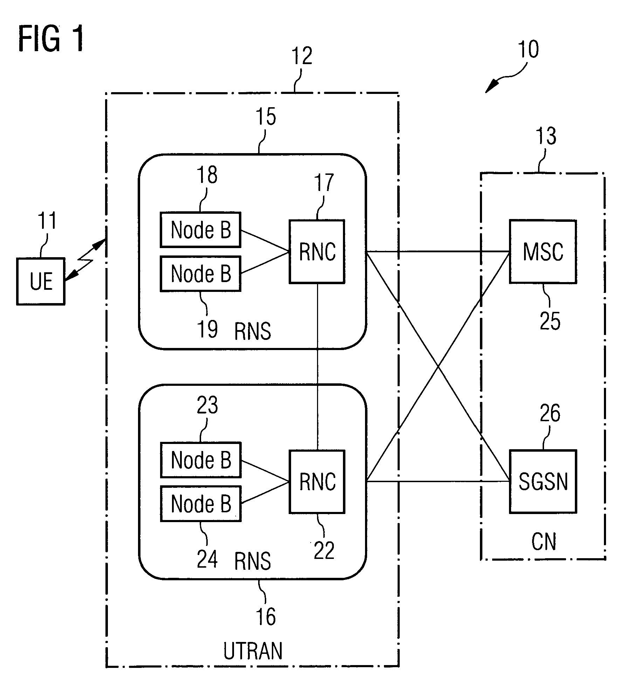

FIG. 1 illustrates in block format a UMTS (Universal Mobile Telecommunications System) type system. A description of the UTMS is disclosed in "3rd Generation Partnership Project (3GPP)", http://www.3gpp.org/.

FIG.1 shows a UMTS 10, which comprises a plurality of UEs (user equipments) 11, UTRAN (UMTS terrestrial radio access network) 12, and a CN (core network) 13. The UEs 11 are connected to the UTRAN 12 by a radio connection whilst the UTRAN 13 is connected to the CN 13.

The UTRAN 12 includes RNSs (radio network sub-systems) 15 and 16. The RNS 15 includes a RNC (Radio Network Controller) 17 and Node Bs 18 and 19. The Node Bs 18 and 19 are joined to the RNC 17. Similarly, the RNS 16 includes a RNC 22 and Node Bs 23 and 24. The Node Bs 23 and 24 are joined to the RNC 22. The RNS 15 is also connected to the RNS 22.

The CN 13 comprises a MSC (mobile switching centre) 25 and a SGSN (Serving General Packet Radio Service Support Node) 26. The MSC 25 is connected to the RNSs 15 and 16 whilst the SGSN 26 is connected to the RNSs 15 and 16.

The UMTS system 10 may be in a CELL_FACH state or a CELL_DCH state. The CELL_FACH state may denote a state of low data transmission in which no dedicated channels are established and only common channels are used. No dedicated radio re-sources in the Node B 18, 19, 23, or 24 are used. The CELL_DCH may state denote a state of high data transmission and dedicated channels are formed. The UE 11 is assigned dedicated radio and hardware resources, which may minimizes transmission delay and allows for high capacity.

The UE 11 is also known as a mobile terminal. The Node B is similar in function to a radio base station. The Node Bs 18, 19, 23, and 24 act as access points of the UTRAN 12 for the UE 11. Information is transmitted the Nodes Bs 18, 19, 23, and 24 and the UE 11 via radio channels. The information is transmitted in an UL (uplink) mode when the information is transmitted from the UE 11 to the Nodes Bs 18, 19, 23, and 24. Similarly, the information is transmitted in an DL (downlink) mode when the information is sent from the Nodes Bs 18, 19, 23, and 24 to the UE 11.

The RNC 17 manages the Node Bs 18, and 19 whilst the RNC 22 manages the Node Bs 23, and 24. The RNCs 17 and 22 are connected to the MSC 25 for a circuit-switched communication, such as a voice call service, and are connected to the SGSN 26 for packet switched communication, such as a wireless Internet service, Voice over IP (VoIP), web-browsing, or e-mail.

A RNC that is in charge of a direct management of the Node B is called a Controlling RNC (CRNC). The CRNC manages common radio resources. On the other hand, a RNC that manages dedicated radio resources for a specific UE is called a Serving RNC (SRNC). The CRNC and the SRNC can be co-located in a same physical node. However, if the specific UE has been moved to an area of a new RNC that is different from the current SRNC, the specific UE may be connected a CRNC and a SRNC that are be located at physically different places.

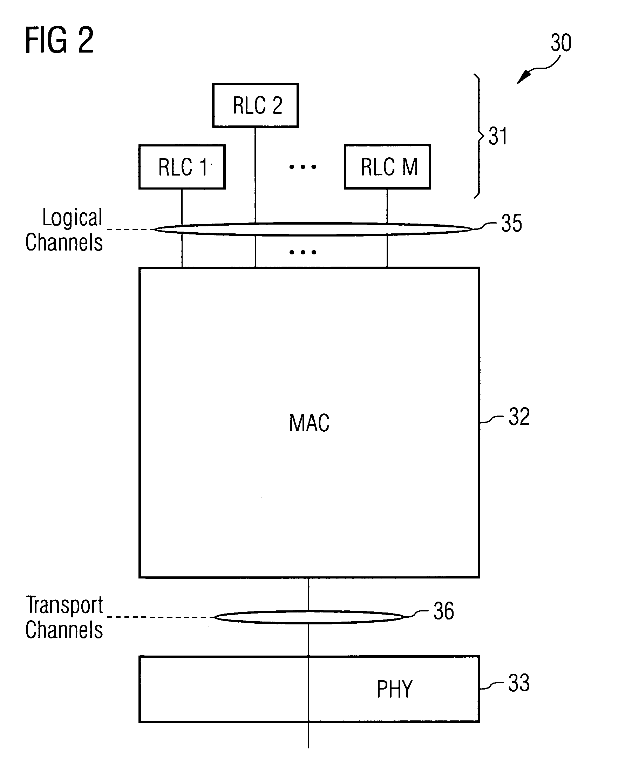

FIG. 2 illustrates a protocol layer structure 30 of the UMTS system 10 of FIG. 1. The protocol layer structure 30 is provided in the UE 11 of FIG. 1 and in the UTRAN 12 of FIG. 1.

The protocol layer structure 30 includes a RLC (Radio Link Control) layer 31, a MAC (Medium Access Control) layer 32, and a PHY (physical) layer 33. The RLC layer 31 is placed above the MAC layer 32 whilst the MAC layer 32 is provided above the PHY layer 33. A PDCP (Packet Data Convergence Protocol) layer, which is not shown in the FIG. 2, is positioned over the RLC layer.

The RLC layer 31 is connected to the MAC layer 32 by a plurality of logical channels whilst the MAC layer 32 is connected to the PHY layer 33 by a plurality of transport channels 36.
The RLC layer 31 includes a plurality of RLC entities 34. The logical channels 35 may include control channels and traffic channels. The control channels and traffic channels are not shown in the FIG. 2.

The MAC layer 32 comprises sub-layer such as, a MAC-c sub-layer, a MAC-d sub-layer, a MAC-es sub-layer, a MAC-e sub-layer, and a MAC-hs sub-layer. The transport channels 36 may comprise dedicated transport channels, and common transport channels. The MAC-es sub-layer may be provided in a SRNC whilst the MAC-e sub-layer may be located in a Node B.

The PDCP layer efficiently transmits data of network protocols, such as IPv4 (Internet Protocol, version 4.0) or IPv6 (Internet Protocol, version 6.0).

The RLC entity 34 provides data transfer service between a higher layer and the MAC 32. The data transfer service may operate in a transparent mode (TM), an unacknowledged mode (UM), or an acknowledged mode (AM). For packet switched mode, the data transfer service operates only in the UM and in the AM, and not in the TM. The RLC entity 34 offers ciphering in the unacknowledged mode (UM) and in the acknowledged mode (AM).

The logical channels 35 are characterised by the kind of information carried by the logical channels 35. The control channels are for transmission of control plane information whilst the traffic channels are for transmission of user plane information.

The MAC layer 32 provides unacknowledged data transfer service between the logical channels 35 and the transport channels 36. The sub-layers of MAC layer 32 perform a set of functions that may include mapping the logical channels 35 to the common transport channels and to the dedicated transport channels, multiplexing one or more logical channels 35 onto the transport channel 36, and ciphering or deciphering of data in the transparent mode (TM).

The transport channels 36 offer a passageway for movement of data between the PHY layer 33 and the MAC layer 32. The dedicated channel is allocated to a specific UE 11 whereas the common physical channel is shared by a group of UEs 11.

The PHY layer 33 provides a means of transmitting data between an air medium and the MAC layer 32, and execution of soft handover of the UE 11 from one geographical cell or area to another geographical cell of the same network.

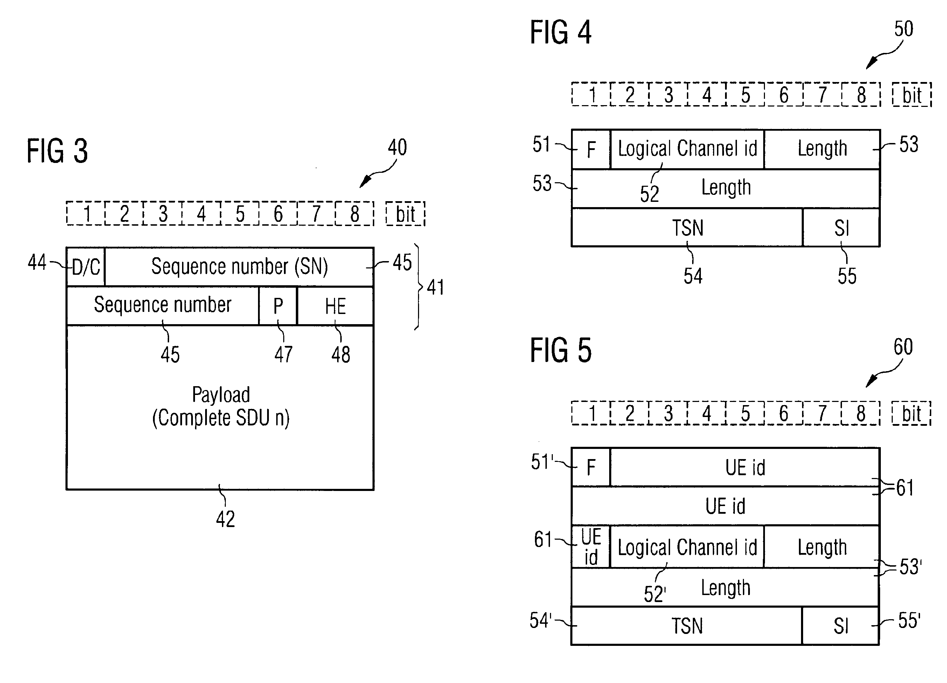

FIG. 3 illustrates AM (acknowledge mode) RLC (radio link control) PDU (protocol data unit) 40, which is transmitted by the RLC layer 31 of FIG. 2. The AM RLC PDU 40 is transmitted in an uplink mode, in which the flow of transmission is from the UE 11 of FIG. 1 towards the UTRAN 12 of FIG. 1.

The AM RLC PDU 40 in the UL mode is similar to an AM RLC PDU 40 in a DL (downlink) mode, which is described in "Radio Link Control (RLC) protocol specification (Release 7)", http://www.3gpp.org/ftp/Specs/html-info/25322.htm.

The AM RLC PDU 40 comprises an AM RLC header 41 and a payload field 42. The AM RLC header 41 includes a D/C (data control) field 44, a SN (sequence number) field 45, a P (polling) field 47 and a HE (header extension) field 48. The length of the D/C field 44, the sequence field 45, the P field 47, and HE field 48 is of sixteen bits long, as shown in the FIG. 3. The payload field 42 includes a complete SDU (service data unit).

The size of the AM RLC PDU 40 is not fix and is flexible. This allows the AM RLC PDU 40 to be responsive to physical layer requirements [and responsive to upper layer requirements, such as IP packet size]. This is unlike other protocol which supports only an AM RLC PDU of a fixed size.

Content of the HE field 48 indicates end position of the payload field 42, as described in "Radio Link Control (RLC) protocol specification (Release 6)",
http://www.3gpp.org/ftp/Specs/html-info/25322.htm. This is difference from a LI (Length Indicator) field, which shows the length of the payload field 42. The LI field is described in "Radio Link Control (RLC) protocol specification (Release 7)", http://www.3gpp.org/ftp/Specs/html-info/25322.htm. The length of payload 42 is in multiple of eight bits.

FIG. 4 illustrates a first MAC-e header 50 of a PDU, or a MAC-es header 50 of a PDU, for the uplink transport channels of FIG. 2. The MAC-es/e header 50 includes a TSN (transmission sequence number field) field 54 and a SI (segmentation indicator) field 55, which support segmentation. The PDU includes the SDU (service data unit) of FIG. 3.

The first MAC-e/es header 50 includes an F (flag) field 51, a logical channel id field 52, a length field 53, the TSN field 54, and the SI field 55. As shown in the FIG. 4, the length of the F field 51, the logical channel id field 52, the length field 53 is of sixteen bits long. The length of the TSN field 54 and the SI field 55 is of eight bits long.

The uplink transport channels for the first MAC-e/es header 50 include CCCH (common control channel), DCCH (dedicated control channel), and DTCH (dedicated traffic channel).

The content of the first MAC-e/es header 50 may be used in a CELL_FACH state and a CELL_DCH state.

The content of the F field 51 is to indicate the presence or absence of an UE id field in the first MAC-e/es header 50. The value of the content of the F field 51, as provided here, is zero, denoting an absence of the UE id field. The content of the UE id field is for resolving any contention. A contention may occur when there is collision of identities from two or more UEs.

The logical channel id field 52, as provided here, is for storing a logical channel id from which the PDU originates. The value of the logical channel id field 52 is zero if the PDU originates from a CCCH (common control channel) of the UE 11.

The content of the logical channel id field 52 is also utilised by the Node B 18, 19, 23, or 24 of the FIG. 1 to determine a correct frame protocol connection for carrying the PDU to the SRNC (serving RNC). The SRNC can utilise the content of logical channel id 52 to determine a correct reordering queue, a logical channel, and a RLC entity.

The contents of the length field 53 and the SI field 55 are utilised to indicate the size of the payload and information about segmentation, such as complete PDU and last segment. This information are later used for reassembly. The segmentation may be requested by the physical layer.

The segmentation is needed to fit the payload into a MAC transport block size as allowed by the uplink grant given by the Node B, or given by available transmit power, or by logical channel priorities in which payload from higher priority are inserted first. If multiplexing of logical channels is possible for lower priorities, the remaining space can be used.

The segmentation requires two bits of information to be recorded in the SI field 55. For example, the bits of "00" indicate no segmentation, the bits of "01" indicate any segment, and the bits of "10" indicate the last segment. Based on this information together with a length information, a TSN information, and a TSN of the last complete MAC-SDU information, a receiver can reassemble the MAC-SDU or MAC PDU as soon as all TSN are received.

The contents of the length field 53 and the SI field 55 of a PDU, in the SRNC, are used to reorder and then to reassembly and the PDU to form a RLC PDU.

The content of the TSN field 54 describes a transmission sequence number of the PDU in the UE 11 side. The content of the TSN field 54 is utilised by the RNC 17 or 22 of FIG. 1 to reorder the PDU in the UTRAN 12 side.

The SRNC, when in the CELL_DCH state, utilises the content of the TSN field for macro diversity to establish UL (uplink) SHO (soft handover) between the Node B 18, 19, 23 or 24 and another Node B 18, 19, 23 or 24. The macro diversity occurs if at least one Node B 18, 19, 23 or 24, receives the PDU.

FIG. 5 illustrates a second MAC-e header 60 of a PDU, or a MAC-es header 60 of a PDU, for the uplink transport channels of FIG. 2. The PDU includes the SDU (service data unit) of FIG. 3

The second MAC-e/es header 60 comprises parts that are similar to the parts of the first MAC-e/es header 50 of FIG. 4. The similar parts of the second MAC-e/es header 60 are denoted with the same part number as the part of the first MAC-e/es header 50 with a prime symbol. The description of the first MAC-e/es header 50 is included here by reference, where appropriate.

The second MAC-e/es header 60 includes an F field 51', a UE id field 61, a logical channel id field 52', a length field 53', a TSN field 54', and a SI' field 55. The length of the F field 51', the UE id field 61, the logical channel id field 52', the length field 53' is of twenty-four bits long. The length of the TSN field 54' and the SI field 55' is of eight bits long.

The value of the content of the F field 51', as provided here, is one, denoting a presence of the UE id field 61.

The content of the UE id field 61 is for resolving any contention. When the UE 11 of FIG. 1 is using an E-RACH (enhanced random access channel), the UE 11 uses the F field 51' to denote the presence status of the UE id field 61 in the second MAC-e header 60.

After the UTRAN 12 has indicated a correct reception of the content of the UE id field 61, the UE 11 stops including the UE id field 61 in the second MAC-e/es header 60. The UTRAN 12 may confirm the correct reception of the content of the UE id field 61 by sending the value of the UE id field 61 back to the UE 11, as confirmation of correct receipt.

The value of the UE id field 61, as provided here, is unique. The UE 11, as provided here, usually assigns a value to the content of the UE id field 60. The content of the UE id field 60 is allocated by the UTRAN 12, when the UE 11 is in a RRC (radio resource connection) connected state, and is not performing a cell, or URA (UTRAN registration area) update procedure due to a cell reselection.

The UE id field 60 is also assigned a random value by the UE 11, when the UE 11 is performing the cell, or the URA update due to the cell reselection or a RRC connection request procedure. As the message is a type of a CCCH message, a permanent UE id or U-RNTI (UTRAN radio network temporary identity) is included in a RNC message. The permanent UE id or the U-RNTI can be used to identify the UE 11. The UTRAN 12 can later allocate a unique id in a first DL (downlink) message back to the UE 11. The unique id is then used in subsequent RACH or enhanced RACH procedures.

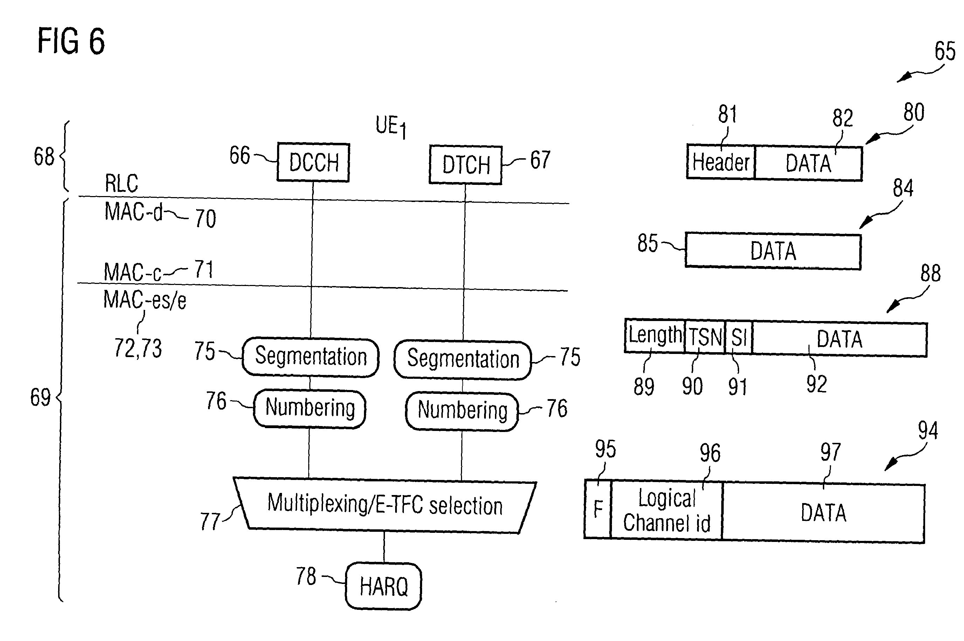

FIG. 6 illustrates a simplified protocol architecture 65 for E-DCH (enhanced dedicated channel) in the side of a UE. The FIG. 6 shows parts that are similar to the parts of FIGS. 1 to 5. The similar parts are denoted are with similar names. The description of FIGS. 1 to 5 is included by reference, where appropriate.

The FIG. 6 shows a mapping of DTCH (dedicated traffic channel) and DCCH (dedicated control channel) to E-DCH (enhanced dedicated channel). The simplified protocol architecture 65 includes a left part and a right part. The left part shows a RLC layer 68 and a MAC layer 69. In contrast, the right part shows decompositions of PDUs.

The RLC layer 68 is placed above the MAC layer 32. The MAC layer 69 comprises a MAC-d sub-layer 70, a MAC-c sub-layer 71, and a MAC-es/e sub-layers 72 and 73. The MAC-d sub-layer 70 is provided above the MAC-c sub-layer 71 whilst the MAC-c sub-layer 71 is located above the MAC-es/e sub-layers 72 and 73.

The RLC layer 68 includes DCCH entity 66 and DTCH entity 67. The MAC-es/e sub-layers 72 and 73 include segmentation entities 75, numbering entities 76, a multiplexing and E-TFC (Transport Format Combination) selection entity 77, and a HARQ (hybrid automatic retransmission) entity 78.

The DCCH entity 66 and the DTCH entity 67 are connected to the segmentation entities 75 whilst the segmentation entities 75 are connected to the numbering entities 76. The numbering entities 76 are connected the multiplexing and E-TFC selection entity 77, which is connected to the HARQ entity 78.

A RLC PDU 80 corresponds to the DCCH entity 66 and the DTCH entity 67. The RLC PDU 80 comprises a header field 81 and a data field 82. A MAC-d PDU 84, which corresponds to the MAC-d sub-layer 70, includes a data field 85. A MAC-es PDU 88 corresponds to the segmentation entity 75 and the numbering entity 76. The MAC-es PDU 88 comprises a MAC es-header and a data field 92. The MAC-es header includes a length field 89, a TSN field 90, and a SI field 91. A MAC-e PDU 94, which corresponds to the multiplexing and E-TFC selection entity 77, includes a MAC-e header, and a data field 97. The MAC-e header comprises a F field 95, a logical channel id field 96.

A method of transmission through the E-DCH at the UE side comprises the step of receiving a plurality of SDUs (service data units) from a higher layer by the RLC layer 31. The RLC layer 31 segments or concatenates the SDUs, based on physical layer requirements. Headers are added to the SDUs to form the RLC PDUs 80. The RLC PDUs 80 may be delivered to the MAC-d sub-layer 70 via the DCCH entity 66 and DTCH entity 67 in acknowledgement mode.

The MAC-d sub-layer 70 receives the RLC PDUs 80 and sends the MAC-d PDUs 84 to the MAC-es sub-layer 72, without adding MAC-d headers to the MAC-d PDUs 84. The MAC-d PDUs 84 includes the RLC PDUs 80.

The MAC-es sub-layer 72 receives the MAC-d PDUs 84 and includes the MAC-es headers onto the MAC-d PDUs 84. The segmentation entity 75 then receives the MAC-es PDU 88 and divides the MAC-es PDUs 88 in a manner directed by a PHY layer of the UE. The segmentation entity 75 uses the length field 89 and the SI field 92 of the MAC-es header to record information related to the segmentation, and sends the segmented MAC-es PDU 88 to the numbering entity 76.

The numbering entity 76 later receives the segmented MAC-es PDU 88 and records the transmission sequence number of the MAC-es PDU 88 onto the TSN field 90.

The multiplexing and E-TFC selection entity 77 of the MAC-e sub-layer 73 afterward receives the numbered MAC-es PDUs 88 and adds the MAC-e headers onto the MAC-es PDUs 88 to form the MAC-e PDUs 94. The multiplexing and E-TFC selection entity 77 records the logical channel id from which the MAC-es PDU 88 originates onto the logical channel id field 96.

The multiplexing and E-TFC selection entity 77 then multiplexes the MAC-e PDUs 94 into an order as directed by information received from the UTRAN side of the E-DCH. The multiplexed MAC-e PDU 94 is later sent to the HARQ entity 78.

The HARQ entity 78 obtains the MAC-e PDU 94 from the MAC-e sub-layer 73, stores the MAC-e PDU 94, transmits the MAC-e PDU 94 to the PHY layer of the UE, and re-transmits any lost or corrupted MAC-e PDU 94 depending on HARQ ACK or NACK information form the Node B(s).

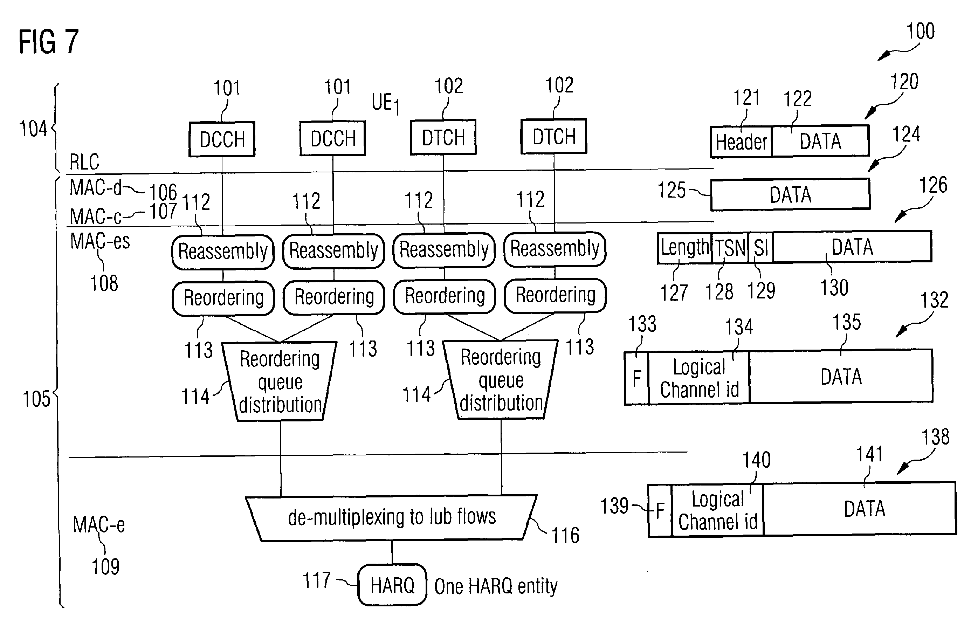

FIG. 7 illustrates a simplified protocol architecture for E-DCH (enhanced dedicated channel) in the side of a UTRAN. The FIG. 7 shows parts that are similar to the parts of FIGS. 1 to 6. The similar parts are denoted are with similar names.

The description of FIGS. 1 to 6 is included by reference, where appropriate.

The FIG. 7 shows a mapping of DTCHs and DCCHs to E-DCH on the UTRAN side. The simplified protocol architecture 100 comprises a left part and a right part. The left part shows a RLC layer 104 and a MAC layer 105. In contrast, the right part shows decompositions of PDUs.

The RLC layer 104 is located above the MAC layer 105. The MAC layer 105 comprises a MAC-d sub-layer 106, a MAC-c sub-layer 107, a MAC-es sub-layer 108, and a MAC-e sub-layer 109. The MAC-d sub-layer 106 is provided above the MAC-c sub-layer 107 whereas the MAC-c sub-layer 107 is located above the MAC-es sub-layer 108. The MAC-es sub-layer 108 is provided above the MAC-e sub-layer 109.

The RLC layer 104 comprises DCCH entities 101 and DTCH entities 102. The MAC-es sub-layer 108 comprises reassembly entities 112, reordering entities 113, and reordering queue distribution entities 114. The MAC-e sub-layer 109 includes a de-multiplexing entity 116 and a HARQ entity 117.

The DCCH entities 101 and the DTCH entities 102 are connected to the reassembly entities 112 whilst the reassembly entities 112 are connected to the reordering entities 113. The reordering entities 113 are connected the reordering queue distribution entity 114. The reordering queue distribution entity 114 is connected to the de-multiplexing entity 116, which is connected to the HARQ entity 117.

A RLC PDU 120 corresponds to the DCCH entities 101 and the DTCH entities 102. The RLC PDU 120 comprises a header field 121 and a data field 122. A MAC-d PDU 124, which corresponds to the MAC-d sub-layer 106, includes a data field 125. A first MAC-es PDU 126 corresponds to the reassembly entities 112 and the reordering entities 113. The first MAC-es PDU 126 includes a first MAC es-header and a data field 130. The first MAC-es header includes a length field 127, a TSN field 128, and a SI field 129. A second MAC-es PDU 132, which corresponds to the reordering queue distribution entity 114, includes a second MAC-e header, and a data field 135. The second MAC-e header comprises a F field 133, a logical channel id field 134. A MAC-e PDU 138 corresponds to the de-multiplex entity 116 and the HARQ entity 117. The MAC-e PDU 138 comprises a MAC-e header and a data field 141. The MAC-e header includes a F field 139 and the logical channel id field 140.

A method of transmission at the UTRAN side of the E-DCH comprises the step of the HARQ entity 117 receiving the MAC-e PDUs 138 from the HARQ 78 of FIG. 6. The HARQ entity 117 checks for validity and sends an ACK or NACK to the UE. The HARQ entity 117 sends the MAC-e PDUs 138 to the de-multiplex entity 116.

The de-multiplex entity 116 receives the MAC-e PDU 138 from the HARQ entity 117 and send the MAC-e PDU 138 to the reordering queue distribution entity 114 by an appropriate Iub (interface between a RNC and a Node B) flow base on logical channel id information in the logical channel id field 139 of the MAC-e PDU 138. Information retaining to network configuration and transport QOS (Quality Of Service) may also be used to select the reordering queue distribution entity 114.

The reordering queue distribution entity 114 receives the demultiplexed MAC-e PDU 138 in the form of the second MAC-es PDU 132, and sends the second MAC-es PDU 132 to the appropriate queue.

The appropriate reordering entity 113 receives the second MAC-es PDU 132 and removes the F field 133 and the logical channel id 134 to form first MAC-es PDU 126. The reordering entity 113 reorders the first MAC-es PDU 126 base on the information in the TSN field 128 of the first MAC-es PDU 126. The TSN field 128 is removed from the MAC-es PDU 126.

The reassembly entity 112 then reassembly the reordered first MAC-es PDU 126 based on data in the length field 127 and the SI field 129 of the first MAC-es PDU. The length field 127 and the SI field 129 are removed from the reassembled first MAC-es PDU 126 to form the MAC-d PDU 124.

The reassembly entity 112 later sends the MAC-d PDU 124 to the MAC-d sub-layer 106. The MAC-d sub-layer 106 later transmit the MAC-d PDU 124 in the form of the RLC PDU 120 the RLC layer 104.

The embodiments of FIGs. 6 and 7 illustrate an E-DCH type of transmission that can be used in the CELL_FACH state and in an uplink HARQ.

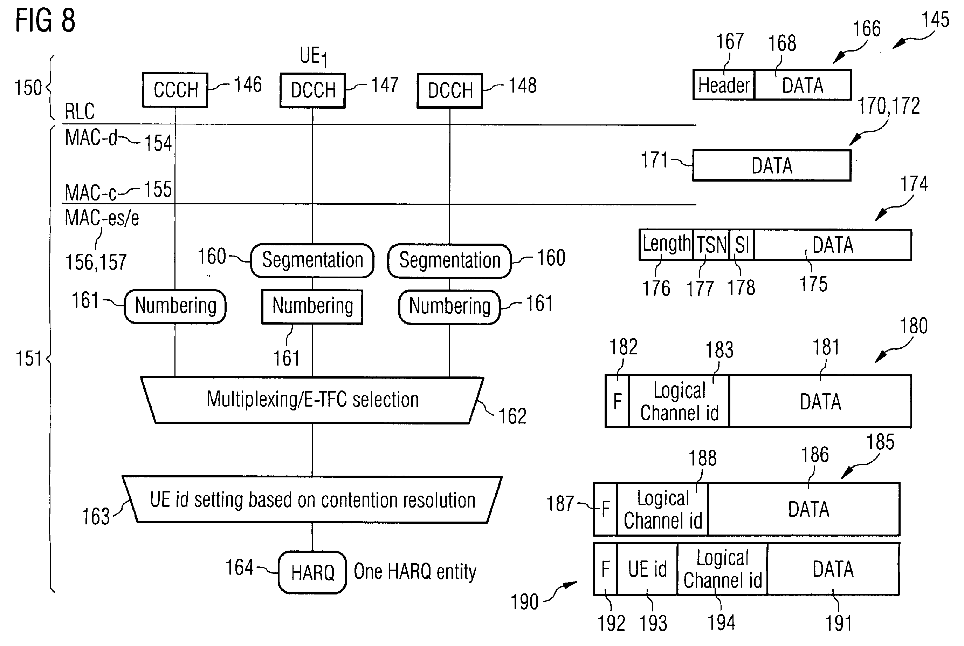

FIG. 8 illustrates a simplified protocol architecture 145 for E-RACH (enhanced random access channel) in the side of a UE. The FIG. 8 shows parts that are similar to the parts of FIGS. 6. The similar parts are denoted are with similar names. The description of FIG. 6 is included by reference, where appropriate.

FIG. 8 illustrates a mapping of CCCH and DCCHs onto the E-RACH. The simplified protocol architecture 145 includes a left part and a right part. The left part shows a RLC layer 150 and a MAC layer 151 whilst the right part shows decompositions of PDUs.

The RLC layer 150 is placed above the MAC layer 151. The MAC layer 151 comprises a MAC-d sub-layer 154, a MAC-c sub-layer 155, and a MAC-es/e sub-layers 156 and 157. The MAC-d sub-layer 154 is provided above the MAC-c sub-layer 155 whilst the MAC-c sub-layer 155 is located above the MAC-es/e sub-layers 156 and 157.

An important aspect is to place the MAC-c between MAC-es and MAC-d such that the operation in E-RACH mode and E-DCH mode are harmonized.

The RLC layer 150 comprises a CCCH entity 146, a DCCH entity 147, and a DCCH entity 148. The MAC-es/e sub-layers 156 and 157 include segmentation entities 160, numbering entities 161, a multiplexing and E-TFC (Transport Format Combination) selection entity 162, a UE id setting entity 163, and a HARQ (hybrid automatic retransmission) entity 164.

The DCCH entity 147 and the DTCH entity 148 are connected to the segmentation entities 160. The segmentation entities 160 are connected to the numbering entities 161 and the CCCH entity 146 is connected to the numbering entity 161. The numbering entities 161 are connected the multiplexing and E-TFC selection entity 162, which is connected to UE id setting entity 163. The UE id setting entity 163 is connected to the HARQ entity 164.

A RLC PDU 166 corresponds to the CCCH entity 146. The RLC PDU 166 comprises a header field 167 and a data field 168.

A MAC-d PDU 170, which corresponds to the MAC-d sub-layer 154, includes a data field 171. A MAC-c PDU 172 corresponds to the MAC-c sub-layer 155. The MAC-c PDU 172 includes a data field 171.

A MAC-es PDU 174 corresponds to the segmentation entity 75 and the numbering entity 76. The MAC-es PDU 174 comprises a MAC es-header and a data field 175. The MAC-es header includes a length field 176, a TSN field 177, and a SI field 178.
A first MAC-e PDU 180, which corresponds to the multiplexing and E-TFC selection entity 162, includes a first MAC-e header, and a data field 181. The MAC-e header comprises an F field 182, a logical channel id field 183.

A second MAC-e PDU 185 corresponds to UE id setting entity 163. The second MAC-e PDU 185 includes a second MAC-e header and a data field 186. The second MAC-e header comprises an F field 187 and a logical channel id field 188.

A third MAC-e PDU 190, which corresponds to the UE id setting entity 163, includes a third MAC-e PDU header and a data field 191. The third MAC-e PDU header comprises an F field 192, a UE id field 193, and a logical channel id field 194.

A method of transmission through the E-RACH at the UE side comprises the step of the RLC layer 150 receiving a plurality of SDUs (service data units) from a UE via a higher layer. Headers are added to the SDUs to form the RLC PDUs 166.

The RLC PDUs 166 may be delivered to the MAC-d sub-layer 154 via the DCCH entity 147 and DCCH entity 148 and to the MAC-c sub-layer 155 via the CCCH entity 146. The DCCH entity are usually used when there is high level of PDUs transmission and the CCCH entity is utilised when there is a low level of PDUs transmission.

The MAC-c sub-layer 155 receives the RLC PDUs 160 from the CCCH entity 146 and transmits the MAC-c PDUs 172 to the numbering entity 161 of the MAC-es sub-layer 156 without any segmentation of the MAC-c PDUs 172.

The MAC-d sub-layer 154 receives the RLC PDUs 160 from the DCCH entities 147 and 148, and sends the MAC-d PDUs 170 to the segmentation entities 160 of the MAC-es sub-layer 156, without adding any headers to the MAC-d PDUs 170. The MAC-d PDUs 170 includes the RLC PDUs 166.

The MAC-es sub-layer 156 adds the MAC-es headers onto the MAC-c PDUs 172 and onto the MAC-d PDUs 170 to form the first MAC-e PDUs 174.

The segmentation entity 160 divides the MAC-d PDUs 170, as directed by a PHY layer of the UE. The segmentation entity 160 records information regarding the segmentation onto the length fields 176 and the SI fields 178 of the MAC-es headers of the segmented first MAC-e PDUs 174.

The numbering entity 161 then records the transmission sequence number onto the TSN field 177 of the first MAC-e PDUs 174 and records the logical id of the first MAC-e PDUs 174 onto the logical channel id field 183. If the first MAC-e PDU 174 originates from the CCCH entity 146, the content of the logical channel id 183 is set to zero.

The multiplexing and E-TFC selection entity 162 later adds the second MAC-e headers onto to the first MAC-e PDUs 174 to form the second MAC-e PDUs 180 and records the logical channel id information of the first MAC-e PDUs 174 onto the logical channel id fields 183.

The multiplexing and E-TFC selection entity 162 multiplex the second MAC-e PDUs 180 as directed by information received from a UTRAN side of the E-RACH.

The UE id setting entity 163 afterwards add UE id information onto the third MAC-e headers of the third MAC-e PDUs 190 to resolve contention and indicate the presence of the UE id information in the F field 192.

The UE id information is removed from the third MAC-e header, as shown in the second MAC-e PDU 185, when the UTRAN side of the E-RACH feedback a correct reception of the content of the UE id field 193. The UTRAN can confirm the correct reception of the content of the UE id field 193 by feeding back the content of the UE id field 193 back to the UE side of the E-RACH. The F field 187 of the second MAC-e PDU 185 is updated to reflect the absence of the UE id field 193.

The HARQ entity 164 receives the second MAC-e PDUs 185 or the third MAC-e PDUs 190, stores the second MAC-e PDUs 185 or the third MAC-e PDUs 190. The HARQ entity 164 later sends the second MAC-e PDUs 185 or the third MAC-e PDUs 190 to the PHY layer of the UE, and re-transmits any lost or corrupted PDU.

In a generic sense, the MAC-c sub-layer 155 may evaluate the UE id of the RLC PDU 160 from the CCCH entity 146 with respect to assigning the data. The MAC-c sub-layer 155 may send the RLC PDU 160 to the segmentation entity 160 and not bypass the segmentation entity 160.

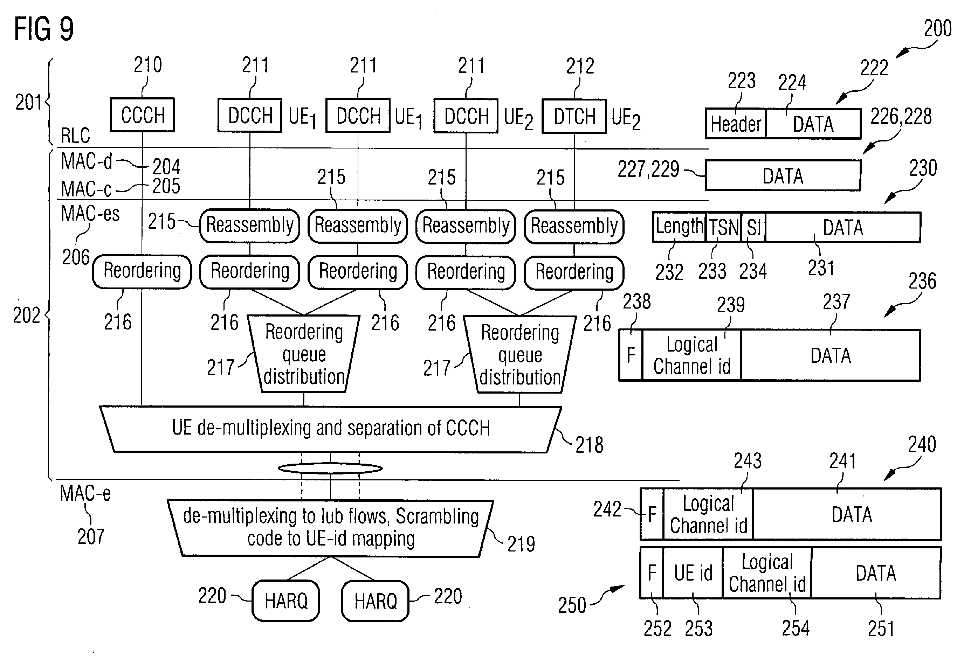

FIG. 9 illustrates a simplified protocol architecture 200 for E-RACH in the side of a UTRAN. The FIG. 9
shows parts that are similar to the parts of FIG. 7. The similar parts are denoted are with similar names. The description of FIG. 7 is included by reference, where appropriate.

The FIG. 9 shows a mapping of CCCH, DCCHs and DCTH to E-RACH on the UTRAN side of the E-RACH. The simplified protocol architecture 200 comprises a left part and a right part. The left part shows a RLC layer 201 and a MAC layer 202. In contrast, the right part shows decompositions of PDUs.

The RLC layer 201 is located above the MAC layer 202. The MAC layer 202 comprises a MAC-d sub-layer 204, a MAC-c sub-layer 205, a MAC-es sub-layer 206, and a MAC-e sub-layer 207. The MAC-d sub-layer 204 is provided above the MAC-c sub-layer 205 whereas the MAC-c sub-layer 205 is located above the MAC-es sub-layer 206. The MAC-es sub-layer 206 is provided above the MAC-e sub-layer 207.

An important aspect is to place the MAC-c between MAC-es and MAC-d such that the operation in E-RACH mode and E-DCH mode are harmonized.

The RLC layer 204 comprises CCCH entity 210, DCCH entities 211, and DTCH entities 212. The MAC-es sub-layer 108 comprises reassembly entities 215, reordering entities 216, reordering queue distribution entities 217, and UE de-multiplexing and separation of CCCH entity 218. The MAC-e sub-layer 109 includes a de-multiplexing entity 219 and HARQ entities 220.

The DCCH entities 211 and the DTCH entities 211 are connected to the reassembly entities 215 whilst the reassembly entities 215 are connected to the reordering entities 216, which are in turn connected to the reordering queue distribution entities 217. The CCCH entity 210 is connected to the reordering entity 216, which is in turn connected to the UE de-multiplexing and separation of CCCH entity 218.

The UE de-multiplexing and separation of CCCH entity 218 is connected to the de-multiplexing entity 219 via one or more Iub flows. The number of Iub flow is dependent on NW (network) configuration. The UTRAN may separate a SRB (signal radio bearer) and from a RB (radio bearer) for different transport QOS.

The de-multiplexing entity 219 is connected to HARQ entities 220. The number of HARQ entities 220 connected to the de-multiplexing entity 219 is dependent on the number of UE simultaneously accessing the E-RACH.

As shown in the FIG. 9, a RLC PDU 222 corresponds to the RLC layer 201. The RLC PDU 222 comprises a header field 223 and a data field 224. A MAC-d PDU 226, which corresponds to the MAC-d sub-layer 204, includes a data field 227. A MAC-c PDU 228 corresponds to the MAC-c sub-layer 205. The MAC-c PDU 228 includes a data field 229. A first MAC-es PDU 230 corresponds to the reassembly entities 215 and the reordering entities 216. The first MAC-es PDU 230 includes a first MAC es-header and a data field 231. The first MAC-es header includes a length field 232, a TSN field 233, and a SI field 234. A second MAC-es PDU 236, which corresponds to the reordering queue distribution entity 217, includes a second MAC-e header, and a data field 237. The second MAC-e header comprises an F field 238, a logical channel id field 239. A first MAC-e PDU 240 and a second MAC-e PDU 250 correspond to the de-multiplex entity 219 and the HARQ entities 220. The first MAC-e PDU 240 comprises a first MAC-e header and a data field 241. The first MAC-e header includes a F field 242 and the logical channel id field 243. The second MAC-e PDU 250 comprises a second MAC-e header and a data field 251. The second MAC-e header includes a F field 252, a UE id field 253, and the logical channel id field 254.

A method of an uplink transmission at the UTRAN side of the E-RACH comprises the step of receiving the first MAC-e PDUs 240 or the second MAC-e PDUs 250 from the HARQ 164 of the UE side of FIG. 8, by the HARQ entity 220. The HARQ entity 220 then sends the first MAC-e PDUs 240 or the second MAC-e PDUs 250 to the de-multiplex entity 219 and indicates delivery status of the first MAC-e PDUs 240 or of the second MAC-e PDUs 250 to the HARQ 164.

The de-multiplex entity 219 then sends the received first MAC-e PDUs 240 or the received second MAC-e PDUs 250 to the UE de-multiplexing and separation CCCH 218 via one or more Iub flows depending on network configuration.

The UE de-multiplexing and separation CCCH 218 assigns the received first MAC-e PDUs 240 or the received second MAC-e PDUs 250 to the appropriate reordering queue distribution entity 217 based on the information in the logical channel id field 243 or 254. The UE de-multiplexing and separation CCCH 218 also removes the F field 238 and the logical channel id field 239 from the second MAC-es PDU 236 to form the first MAC-es PDU 230 and sends the first MAC-es PDU 230 to the reordering entities 216.

If the content of the logical channel id is zero, the MAC-e PDU 240 is sent to the reordering entity 216 for transmission to the CCCH entity 210 or directly to the CCCH entity 210.

The reordering entity 216 reorders the first MAC-es PDU 230 based on the information in the TSN field 233 of the first MAC-es PDU 230 and then sends the reordered first MAC-es PDU 230 to the reassembly entity 215.

The reassembly entity 215 then reassembly the reordered first MAC-es PDU 230 based on data in the length field 232 and the SI field 234 of the first MAC-es PDU 230. The length field 232, the SI field 234, and the TSN field 233 are removed from the reassembled first MAC-es PDU 230. The reassembly entity 215 later sends the MAC-d PDU 226 to the RLC layer 201 via the MAC-d sub-layer 204, or the MAC-c PDU 228 to the RLC layer 201 via the MAC-c sub-layer 205.

The embodiments of FIGs. 8 and 9 illustrate a E-DCH type of transmission in CELL_FACH state, in random access procedure, and in uplink HARQ. The embodiments are a natural counterpart to DL HSDPA (High Speed Downlink Packet Access) operation in CELL_FACH state since the header structure of the embodiments is very similar to header structure introduced for HSDPA, release 7.

In other words, the application introduces a new MAC-e/es header comprising a logical channel ID field, a length field, a transmission sequence-number field, a segmentation indicator field, a flag field, and an UE id field.

These fields are used in CELL_FACH and CELL_DCH state in the following manner:

### Logical channel ID field:

A logical channel id is stored in the logical channel id field of the MAC-e/es header in the UE side, so that a Node B can use it to determine the correct frame protocol connection to be used to carry the data to SRNC. The SRNC can utilise the logical channel id information to determine the correct reordering queue, and logical channel and RLC entity.

### TSN field:

The transmission sequence number is stored in the TSN field to indicate the order of the packets in the UE side and then utilising the content of the TSN field in the UTRAN side to reorder packets to a correct order, which is after HARQ retransmissions. In addition, in CELL_DCH state, the TSN field can be used for Macro Diversity combining procedure in SRNC, when SHO (soft hand over) is configured for accomplishment between two Node Bs.

### Length indicator field and segmentation indicator field:

The length field and segmentation indicator (SI) field is utilised to segment the packets in the UE side, as requested by the L1 in the UE side, and to reassembly the packets to form RLC PDUs in the UTRAN side. The reassembly is performed after reordering.

### FLAG field and UE id field:

The flag field indicates the presence of the UE id in the MAC-e header. When UE is performing random access, the UE uses the flag field to indicate the presence of the UE id in the MAC-e header. The UE id is used to solve contention. The UE stops adding the UE id in the MAC-e header, if the network indicates correct receipt of the UE id. The network may indicate a correct reception of the UE id by sending the UE id back the UE.

The UE identity is unique. When the UE is in RRC connected state and the UE is not performing the cell/URA update procedure due to cell reselection, the value of the UE ID is allocated by the UTRAN. When the UE is performing cell or the UE is performing URA update due to cell reselection or due to RRC Connection request procedure, the UE id is a random value selected by the UE.

However, as the message is a CCCH message the permanent UE id or U-RNTI is included in the RRC message level, which can be used to identify the UE. The UTRAN can allocate unique id in first DL message send back to the UE, which is then used in subsequent RACH procedures.

Although the above description contains much specificity, these should not be construed as limiting the scope of the embodiments but merely providing illustration of the foreseeable embodiments. Especially the above stated advantages of the embodiments should not be construed as limiting the scope of the embodiments but merely to explain possible achievements if the described embodiments are put into practise. Thus, the scope of the embodiments should be determined by the claims and their equivalents, rather than by the examples given.

### List of abbreviations used in this specification

- AM: acknowledge mode
- CCCH: Common Control Channel
- CN: core network
- CRNC: Controlling RNC
- D/C: data control
- DCCH: Dedicated Control Channel
- DL: downlink
- DTCH: Dedicated Traffic Channel
- E-DCH: enhanced dedicated transport channel
- E-RACH: enhanced random access channel
- F: flag
- FACH: Forward Access Channel
- FFS: For Further Study
- HE: header extension
- IPv4: Internet Protocol, version 4.0
- IPv6: Internet Protocol, version 6.0
- Iub: interface between a RNC and a Node B
- HARQ: hybrid automatic retransmission
- HSDPA: High Speed Downlink Packet Access
- L2: Layer 2
- LI: Length Indicator
- MAC: Medium Access Control
- MSC: mobile switching centre
- NW: network
- P: polling
- PDCP: Packet Data Convergence Protocol
- PDU: protocol data unit
- PHY: physical
- QOS: Quality of Service
- RACH: Random Access Channel
- RB: radio bearer
- RLC: radio control link
- RNS: radio network sub-systems
- RRC: Radio Resource Control
- SRB: signal radio bearer
- SDU: service data unit
- SGSN: Serving General Packet Radio Service Support Node
- SHO: soft hard over
- SI: segmentation indicator
- SN: sequence number
- SRNC: Serving Radio Network Controller
- TFC: Transport Format Combination
- TM: transparent mode
- TSN: transmission sequence number
- VoIP: Voice over IP
- UE: user equipment
- UL: uplink
- URA: UTRAN Registration Area
- U-RNTI: UTRAN radio network temporary identity
- UM: unacknowledged mode
- UMTS: Universal Mobile Telecommunications System
- UTRAN: UTMS terrestrial radio access network

### Reference numbers

- 10: UTMS (Universal Mobile Telecommunications System)
- 11: UE (user equipment)
- 12: UTRAN (UMTS terrestrial radio access network)
- 13: CN (core network)
- 15: RNS (radio network sub-system)
- 16: RNS
- 17: RNC (Radio Network Controller)
- 18: Node B
- 19: Node B
- 22: RNC
- 23: Node B
- 24: Node B
- 25: MSC (mobile switching center)
- 26: SGSN (Serving General Packet Radio Service Support Node)
- 30: protocol layer structure
- 31: RLC (Radio Link Control) layer
- 32: MAC (Medium Access Control) layer
- 33: PHY (physical) layer
- 34: RLC entity
- 35: logical channel
- 36: transport channel
- 40: AM (acknowledge mode) RLC PDU (packet data unit)
- 41: AM RLC header
- 42: payload
- 44: D/C (data control) field
- 45: sequence number field
- 47: P (parity) field
- 48: HE (header extension) field
- 50: first MAC-e/es header
- 51, 51': F field
- 52, 52': logical channel id field
- 53, 53': length field
- 54, 54': TSN (transmission sequence number field) field
- 55, 55': SI field
- 60: first MAC-e/es header
- 61: UE id field
- 65: simplified protocol architecture
- 66: DTCH (dedicated traffic channel) entity
- 67: DCCH (dedicated control channel) entity
- 68: RLC layer
- 69: MAC layer
- 70: MAC-d sub-layer
- 71: MAC-c sub-layer
- 72: MAC-es sub-layer
- 73: MAC-e sub-layer
- 75: segmentation entity
- 76: numbering entity
- 77: a multiplexing and E-TFC (transport format combination) selection entity
- 78: HARQ (hybrid automatic retransmission) entity
- 80: RLC PDU
- 81: header field
- 82: data field
- 84: MAC-d PDU
- 85: data field
- 88: MAC-es PDU
- 89: length field
- 90: TSN field
- 91: SI field
- 92: data field
- 94: MAC-e PDU
- 95: F field
- 96: logical channel id field
- 97: data field
- 100: simplified protocol architecture
- 101: DTCH entity
- 102: DCCH entity
- 104: RLC layer
- 105: MAC layer
- 106: MAC-d sub-layer
- 107: MAC-c sub-layer
- 108: MAC-es sub-layer
- 109: MAC-e sub-layer
- 112: reassembly entity
- 113: reordering entity
- 114: reordering queue distribution entity
- 116: de-multiplexing
- 117: HARQ entity
- 120: RLC PDU
- 121: header field
- 122: data field
- 124: MAC-d PDU
- 125: data field
- 126: first MAC-es PDU
- 127: length field
- 128: TSN field
- 129: SI field
- 130: data field
- 132: second MAC-es PDU
- 133: F field
- 134: logical channel id field
- 135: data field
- 138: MAC-e PDU
- 139: F field
- 140: logical channel id field
- 141: data field
- 145: simplified protocol architecture
- 146: CCCH entity
- 146: DTCH entity
- 147: DCCH entity
- 150: RLC layer
- 151: MAC layer
- 154: MAC-d sub-layer
- 155: MAC-c sub-layer
- 156: MAC-es sub-layer
- 157: MAC-e sub-layer
- 160: segmentation entity
- 161: numbering entity
- 162: a multiplexing and E-TFC selection entity
- 163: UE id setting
- 164: HARQ entity
- 166: RLC PDU
- 167: header field
- 168: data field
- 170: MAC-d PDU
- 171: data field
- 174: MAC-es PDU
- 176: length field
- 177: TSN field
- 178: SI field
- 175: data field
- 180: first MAC-e PDU
- 181: data field
- 182: F field
- 183: logical channel id field
- 185: second MAC-e PDU
- 186: data field
- 187: F field
- 188: logical channel id
- 190: third MAC-e PDU
- 191: data field
- 192: F field
- 193: UE id field
- 194: logical channel id
- 200: simplified protocol architecture
- 201: RLC layer
- 202: MAC layer
- 204: MAC-d sub-layer
- 205: MAC-c sub-layer
- 206: MAC-es sub-layer
- 207: MAC-e sub-layer
- 210: CCCH entity
- 211: DCCH entity
- 212: DTCH entity
- 215: reassembly entity
- 216: reordering entity
- 217: reordering queue distribution entity
- 218: UE de-multiplexing and separation of CCCH entity
- 219: de-multiplexing
- 220: HARQ entity
- 222: RLC PDU
- 223: header field
- 224: data field
- 226: MAC-d PDU
- 227: data field
- 228: MAC-c PDU
- 229: data field
- 230: first MAC-es PDU
- 231: data field
- 232: length field
- 233: TSN field
- 234: SI field
- 236: second MAC-es PDU
- 237: data field
- 238: F field
- 239: logical channel id field
- 240: first MAC-e PDU
- 241: data field
- 242: F field
- 243: logical channel id field
- 250: second MAC-e PDU
- 251: data field
- 252: F field
- 253: UE id field
- 254: logical channel id field

## Claims

1. A method for uplink transfer in a wireless communications system over a wireless interface between a radio network and a user equipment node (UE), at the UE side
wherein a MAC layer of the UE side comprises a MAC-d sub-layer, a MAC-c sub-layer, and a MAC-es sub-layer with the MAC-c sub-layer being provided between the MAC-d sub-layer and the MAC-es sub-layer.

2. The method according to claim 1, comprising the step of
evaluating an UE id with respect to assigning a protocol data unit (PDU) by the MAC-c sub-layer.

3. The method according to claim 2, further comprising the step of
sending the PDU for segmentation and
storing information regarding the segmentation of the PDU in a header of the PDU.

4. The method according to claim 1, further comprising the step of
providing a protocol data unit (PDU) to a medium access control (MAC) layer of the UE,
segmenting the PDU by the MAC layer of the UE, and
storing information regarding the segmentation of the PDU in a header of the PDU.

5. The method according to claim 4,
**characterised in that**
the PDU is segmented as requested by a physical layer of the UE.

6. The method according to claim 5,
**characterised in that**
the information regarding the segmentation is stored in a length field of the header of the PDU and a segmentation indicator (SI) field of the header of the PDU.

7. The method according to one of the preceding claims comprises the further step of
storing a transmission sequence number (TSN) of the PDU in the header of the PDU.

8. The method according to claim 7
**characterised in that**
the transmission sequence number (TSN) of the PDU is stored in a TSN field of the header of the PDU.

9. The method according to one of the preceding claims comprises the further step of
storing a logical channel id of the PDU in the header of the PDU.

10. The method according to claim 9
**characterised in that**
the logical channel id of the PDU is stored in a logical channel id field of the header of the PDU.

11. The method according to one of the preceding claims comprises the further step of
storing a presence status of a UE id in the header of the PDU.

12. The method according to claim 11
**characterised in that**
the presence status of the UE id is stored in a F field of the header of the PDU.

13. The method according to claim 11 or 12 comprises the further step of
storing a UE id in the header of the PDU.

14. The method according to claim 13
**characterised in that**
the UE id is stored in a UE id field of the header of the PDU.

15. The method according to claim 14
**characterised in that**
the presence status of the UE id indicates an absence of the UE id field in the header of the PDU, and the UE id field is not provided of the header of the PDU, if the radio network has indicated a correct receipt of the UE id to the UE.

16. The method according to one of claims 13 to 15
**characterised in that**
a value of the UE id is allocated by the radio network if the UE is in a Radio Resource Control (RRC) connected state and is not performing a cell or UTRAN Registration Area (URA) update procedure due to cell reselection.

17. The method according to one of claims 13 to 15
**characterised in that**
the UE selects a random value for the UE id if the UE is performing a cell or UTRAN Registration Area (URA) update procedure due to cell reselection or if the UE is performing a Radio Resource Control (RRC) Connection request procedure.

18. A method for uplink transfer in a wireless communications system over a wireless interface between a radio network and a user equipment node (UE), at the radio network side,
wherein a MAC layer of the radio network side comprises a MAC-d sub-layer, a MAC-c sub-layer, and a MAC-es sub-layer with the MAC-c sub-layer being provided between the MAC-d sub-layer and the MAC-es sub-layer.

19. The method according to claim 18 comprises the further steps of:
receiving a PDU by a medium access control (MAC) layer of the radio network side, and
reassembling the PDU by the MAC layer of the radio network side based on segmentation information, which is stored in a header of the PDU.

20. The method according to claim 19
**characterised in that**
the segmentation information is stored in a length field of the header of the PDU and is stored in a segmentation indicator (SI) field of the header of the PDU.

21. The method according to claims 19 or 20 comprises the further step of
reordering the PDU based on a transmission sequence number (TSN), which is stored in the header of the PDU.

22. The method according to claim 21
**characterised in that**
the transmission sequence number (TSN) is stored in a transmission sequence number TSN field of the PDU.

23. The method according to one of claim 19 to 22 comprises the further step of
determining a reordering queue based on a logical channel id, which is stored in the header of the PDU.

24. The method according to one of claim 19 to 23 comprises the further step of
determining a logical channel based on the logical channel id, which is stored in the header of the PDU.

25. The method according to one of claim 19 to 24 comprises the further step of
determining a Radio Link Control (RLC) entity based on the logical channel id, which is stored in the header of the PDU.

26. The method according to one of claims 23 to 25
**characterised in that**
the logical channel id is stored in a logical channel id field of the header of the PDU.

27. The method according to one of claim 19 to 26 comprises the further step of
resolving contention based on an UE id, which is stored in the header of the PDU.

28. The method according to claim 27
**characterised in that**
the UE id is stored in an UE id field of the header of he PDU.

29. A wireless communications system in an uplink transfer over a wireless interface between a radio network and the user equipment node (UE), the wireless communications system comprising:
a medium access control (MAC) layer at the UE side comprises
a MAC-d sub-layer,
a MAC-c sub-layer, and
a MAC-es sub-layer with the MAC-c sub-layer being provided between the MAC-d sub-layer and the MAC-es sub-layer.

30. The wireless communications system of claim 29
**characterised in that**
the MAC-es sub-layer or the MAC-e sub-layer comprises a segmentation entity for segmenting a protocol data unit (PDU) and for storing information regarding the segmentation in a header of the PDU.

31. The wireless communications system of claim 30
**characterised in that**
the MAC-es sub-layer or the MAC-e sub-layer further comprises a numbering entity for storing a transmission sequence number (TSN) in the header of the PDU.

32. The wireless communications system of claim 31
**characterised in that**
the MAC-es sub-layer or the MAC-e sub-layer further comprises a multiplexing entity for storing a logical id of the PDU in the header of the PDU and for storing a UE id status flag of the PDU in the header of the PDU.

33. The wireless communications system of claim 32
**characterised in that**
the MAC-e sub-layer further comprises a UE id setting entity for storing a UE id of the PDU in the header of the PDU.

34. A wireless communications system in an uplink over a wireless interface between the radio network and a user equipment node (UE), the wireless communications system comprising:
a medium access control (MAC) layer at the radio network side comprises
a MAC-d sub-layer,
a MAC-c sub-layer, and
a MAC-es sub-layer with the MAC-c sub-layer being provided between the MAC-d sub-layer and the MAC-es sub-layer.

35. The wireless communications system of claim 34
**characterised in that**
the MAC-es sub-layer comprises a reassembly entity for reassembling a segmented protocol data unit (PDU) based on a segmentation information, which is stored in a header of the PDU.

36. The wireless communications system of claim 35
**characterised in that**
the MAC-es sub-layer further comprises a reordering entity for reordering a PDU based on a transmission sequence number (TSN), which is stored in the header of the PDU.

37. The wireless communications system of claim 36
**characterised in that**
the MAC-es sub-layer or the MAC-e sub-layer further comprises a reordering queue distribution entity for determining reordering queue for a PDU based on a logical channel id, which is stored in the header of the PDU.

38. The wireless communications system of claim 37
**characterised in that**
the MAC-e sub-layer resolves contention for a PDU using a UE id, which is stored in the header of PDU.
